# EUROPÄISCHE PATENTANMELDUNG

(11) **EP 3 795 044 A1**
(43) Veröffentlichungstag der Anmeldung: **24.03.2021**
(21) Anmeldenummer: 20196505.0
(22) Anmeldetag: 16.09.2020
(51) Int. Cl.: A47K 17/02

(54) **AUFSATZ FÜR EINEN TOILETTENSITZ**

(30) Priorität: 18.09.2019 CH 11962019
(71) Anmelder: Balzer, Kurt, 8345 Adetswil (CH)
(72) Erfinder: Balzer, Kurt, 8345 Adetswil (CH)
(74) Vertreter: Rey, Antje Gabriele

(57) **Zusammenfassung**

Die Erfindung betrifft einen Aufsatz (1) für einen Toilettensitz (2) zur Bildung einer gegenüber der Sitzfläche (3) des Toilettensitzes (2) erhöhten Aufsatzsitzfläche (4). Der Aufsatz ist im Wesentlichen als eine rechteckförmige Platte ausgebildet und weist eine die Aufsatzsitzfläche (4) bildende Oberseite, eine zur Auflage auf der Sitzfläche (3) bestimmte Unterseite (5), eine Vorderseite (6), eine Rückseite (7) und zwei Seitenflächen (8, 9) auf, wobei der Aufsatz aus mindestens zwei Lagen gebildet ist, wobei eine erste starre Lage die Oberseite bzw. die Aufsatzsitzfläche (4) bildet und eine zweite elastische Lage die Unterseite bildet, und wobei die Rückseite (7) des Aufsatzes (1) eine Einbuchtung (17) aufweist, welche sich über alle bzw. beide Lagen erstreckt.

## Beschreibung

### Gebiet der Erfindung

Die Erfindung betrifft einen Aufsatz für einen Toilettensitz.

### Hintergrund

Herkömmliche Toilettensitze sind bekannt und bei Toiletten bzw. WCs im privaten und öffentlichen Gebrauch üblich. Solche Toilettensitze sind im Wesentlichen ringförmig mit einer vom Ring umgebenen Öffnung, durch welche die Toilettenschüssel zugänglich ist. Auf solchen Toilettensitzen wird für die Defäkation eine normale Sitzhaltung eingenommen. Es ist indes bekannt und im nachfolgend erwähnten Stand der Technik zum Teil genauer erläutert, dass es gesundheitlich vorteilhaft ist, wenn die Defäkation in einer hockenden Stellung erfolgen kann. Es sind daher verschiedene Vorschläge bekannt, wie der herkömmliche Toilettensitz mit separaten Zusatzeinrichtungen ergänzt werden kann, um die hockende Stellung zu ermöglichen. So ist aus DE 10 2016 009 308 A1 eine höhenverstellbare Hubvorrichtung bzw. Fussbank bekannt, welche es erlauben soll, über dem herkömmlichen Toilettensitz bzw. über der Toilettenschüssel eine hockende Haltung einzunehmen. DE 10 2014 002 367 A1 und DE 10 2014 490 A1 schlagen dafür vor, seitlich der Toilette Trittstufen vorzusehen. DE 20 2015 103 515 U1 schlägt eine an der Toilette befestigte Rohrstruktur zur Bildung eines Fusstritts vor der Toilette vor, welcher ebenfalls die Einnahme einer hockenden Stellung ermöglichen soll. AT 393 076 B zeigt eine Toilettenanlage, bei welcher ein Metallrahmen mit seitlichen Fussstützen eine hockende Stellung ermöglichen soll. Dieses Dokument schlägt es ferner vor, den ansonsten herkömmlichen Toilettensitz mit seiner Sitzfläche um einen wählbaren Winkel schräg nach oben ragend einstellbar auszuführen, was zusammen mit einer Fussstütze eine Sitzhocke ermöglichen soll. Aus DE 20 2013 008 283 U1 ist ferner ein Toilettensitz mit einer Spreizvorrichtung für Pobacken bekannt, welcher im Pflegebereich die Körperreinigung erleichtern soll. In der Praxis zeigt es sich, dass die vorgeschlagenen Ausführungen zur Einnahme einer hockenden Stellung für viele Personen zu unbequem sind. Auch stehen der entsprechende konstruktive Aufwand und der zusätzliche Reinigungsaufwand der Verbreitung der genannten Lösungen entgegen. Aus PCT/EP2018/058849 ist ein Toilettensitz bekannt, welcher die genannten Nachteile behebt, wobei dessen Vorteile sich aber nur bei dem eingebauten Toilettensitz ergeben.

### Darstellung der Erfindung

Der Erfindung liegt die Aufgabe zu Grunde, auch auf herkömmlichen Toilettensitzen eine hockende Haltung zu ermöglichen.

Diese Aufgabe wird mit einem Aufsatz gemäss Anspruch 1 gelöst.

Der Aufsatz ermöglicht es, im Vorderbereich eines herkömmlichen Toilettensitzes eine erhöht angeordnete Schenkelauflage zu bilden, welche lose auf dem Toilettensitz aufliegt und separat von diesem ist. Der Aufsatz kann auf dem herkömmlichen Toilettensitz im eigenen Badezimmer angeordnet werden, kann aber insbesondere überall hin mitgenommen werden, also auch beim Besuch einer Toilette eines Restaurants, eines Hotels, einer Ferienwohnung usw. Er ermöglicht die Vorteile, wie sie beim erwähnten Toilettensitz gemäss der Anmeldung PCT/EP2018/058849 erzielbar sind.

Durch die erhöhte Schenkelauflage, welche von dem Aufsatz gebildet wird, wird es dem Benützer/der Benützerin des Toilettensitzes mit dem darauf platzierten Aufsatz einfach ermöglicht, nur auf den Schenkeln abgestützt auf dem Toilettensitz bzw. auf dem Aufsatz Platz zu nehmen, so dass das Gesäss frei schwebend über der Toilettenschüssel zu liegen kommen kann und nicht auf dem Mittelbereich des Toilettensitzes abgestützt wird bzw. den Mittelbereich des Toilettensitzes nicht berührt. Die Belastung in dieser Stellung liegt auf den Oberschenkeln des Benutzers/der Benutzerin und nicht auf dessen/deren Gesäss, welches nicht druckbelastet ist. Dadurch wird der Schliessmuskel mechanisch nicht behindert. Die Darmentleerung bzw. Defäkation kann in einer Stellung erfolgen, welche im Wesentlichen dieselben Vorteile bietet, welche der Hockstellung zugeschrieben werden. Dank der erhöhten Schenkelauflage, welche mittels des Aufsatzes auf einem herkömmlichen Toilettensitz erzielt werden kann, kann diese Stellung komfortabel eingenommen werden. Der erfindungsgemässe Aufsatz ist zudem einfach herstellbar und benötigt auch keinen erhöhten Reinigungsaufwand und hat keinen Platzbedarf seitlich oder im Fussbereich vor der Toilette. Die elastische Lage des Aufsatzes sorgt für ein sicheres Aufliegen des lose auf dem Toilettensitz platzierbaren Aufsatzes auf dem herkömmlichen Toilettensitz. Bevorzugt liegt die Dicke des Aufsatzes im Bereich von 3 cm bis 6 cm, wovon die elastische Lage im unbelasteten Zustand 0,5 cm bis 2 cm ausmacht. Bevorzugt ist die elastische Lage aus Naturkautschuk gebildet oder allenfalls aus einem Elastomer, insbesondere einem synthetischen Kautschuk. Weiter ist es bevorzugt, dass die starre Lage aus Holz gebildet ist oder allenfalls aus Kunststoff gebildet ist. Die Unterseite des Aufsatzes und die Aufsatzsitzfläche liegen bevorzugt parallel zueinander.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen
Figur 1 eine Draufsicht auf einen Toilettensitz mit einem darauf platzierten erfindungsgemässen Aufsatz; und
Figur 2 eine Ansicht von vorne eines Toilettensitzes mit einem auf diesem platzierten Aufsatz.

### Weg(e) zur Ausführung der Erfindung

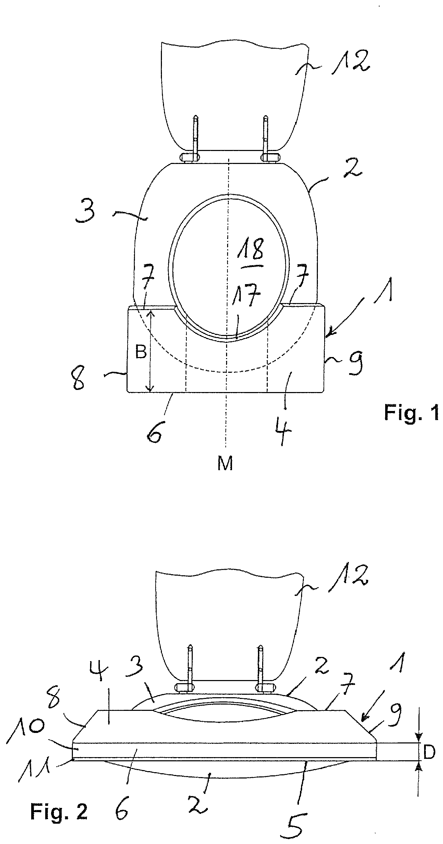

Die Figuren 1 und 2 zeigen eine Ausführungsform des erfindungsgemässen Aufsatzes 1, welcher auf einem herkömmlichen Toilettensitz 2 platziert ist. Der Toilettensitz 2 ist ringförmig und umschliesst die Öffnung 18 der Schüssel eines Wasserklosetts, welches ansonsten nicht dargestellt ist. Der Toilettensitz 2 weist Scharniermittel und einen nur teilweise dargestellten Deckel 12 auf, was bekannt ist und hier nicht weiter erläutert wird. Der Toilettensitz ist in der Regel symmetrisch zur Mittellängsachse M des WCs angeordnet, welche in der Figur 1 strichpunktiert eingezeichnet ist.

Der Aufsatz 1 ist im Wesentlichen plattenförmig und wird beim Gebrauch des WCs lose auf dem herkömmlichen Toilettensitz 2 platziert, um eine erhöhte Aufsatzsitzfläche 4 durch die Oberfläche des Aufsatzes zu bilden. Mit der erhöhten Sitzposition werden die vorgängig erläuterten Vorteile erzielt. Der Aufsatz ist im Wesentlichen rechteckförmig, weist aber auf der Rückseite 7 eine Einbuchtung 17 auf, welche eine Anpassung des Aufsatzes an die Form des Toilettensitzes bzw. der Toilettenschüssel ergibt. Der plattenförmige Aufsatz weist ferner eine Vorderseite 6 und Seitenflächen 8 und 9 auf sowie eine Unterseite 5, welche parallel zur Oberseite bzw. zur Aufsatzsitzfläche verläuft.

Der Aufsatz ist aus zwei oder allenfalls mehr Lagen gebildet, wobei die obere Lage 10 aus einem starren Material gebildet ist, vorzugsweise aus Holz. Die starre Lage kann aber auch aus einem Kunststoff gebildet sein, wie er im Sanitärbereich und insbesondere für Toilettensitze zum Einsatz kommt. Geeignete Kunststoffe sind dem Fachmann bekannt. Die untere Lage 11, welche die Unterseite 5 bildet, allenfalls die unterste Lage, falls mehr als zwei Lagen vorhanden sind, ist aus einem elastischen Material gebildet, welches ein gutes und nicht rutschendes Aufliegen des Aufsatzes auf dem Toilettensitz gewährleistet. Bevorzugt ist die untere Lage 11 aus Naturkautschuk gebildet, es kann aber auch ein synthetischer Kautschuk oder ein anderes Elastomer verwendet werden.

Die Aufsatzsitzfläche 4 bildet bei der Einnahme der Sitzstellung auf dem Toilettensitz die Auflage für die Oberschenkel des Benutzers und da diese Schenkelauflage gegenüber der Sitzfläche 3 des Toilettensitzes erhöht ist, wird der gewünschte Effekt erreicht, dass das Gesäss des Benutzers frei schwebend über der Toilettenschüssel positioniert gehalten werden kann und nicht auf dem Mittelbereich des Toilettensitzes bzw. auf der Sitzfläche 3 aufliegt. Es zeigt sich, dass bereits eine Erhöhung um 3 cm den gewünschten Effekt gut erzielen kann. Eine Dicke D des Aufsatzes im Bereich von 3 cm bis 6 cm ist ein bevorzugter möglicher Wert. Dabei ist die Dicke der elastischen Lage 11 im Bereich von 0,5 cm bis 2 cm bevorzugt.

Die Aufsatzsitzfläche 4 kann eben ausgeführt sein, wie dargestellt, sie kann aber allenfalls auch Vertiefungen aufweisen, in denen die Oberschenkel des Benutzers teilweise aufgenommen werden können, es ist dann aber auch der tiefste Bereich der Aufsatzsitzfläche noch gegenüber der Sitzfläche 3 des Toilettensitzes erhöht. Dies insbesondere um einen Wert im genannten Bereich von 3 cm bis 6 cm.

Der Aufsatz ist so ausgeführt, dass er in Draufsicht im Wesentlichen rechteckig ist, wie in Figur 1 gezeigt. Dies abgesehen von der Einbuchtung 17 in der hinteren Längsseite bzw. Rückseite 7 des Rechtecks, die in Querrichtung des Toilettensitzes 2 zu liegen kommt, wenn der Aufsatz auf dem Toilettensitz platziert wird. Diese Einbuchtung ergibt auch mit dem Aufsatz 1 die für Toilettensitze übliche ovale Form im hinteren Bereich des Aufsatzes, wie in Figur 1 gut ersichtlich. Die Aufsatzsitzfläche kann zum Beispiel eine Breite B von 16 cm bis 20 cm aufweisen, um eine Auflage für die Oberschenkel zu bilden, welche eine bequeme Haltung des Gesässes im Abstand zur Sitzfläche 3 des Toilettensitzes. Die Breite B kann auch geringer oder grösser sein, sollte aber 10 cm nicht unterschreiten, um zu einen zu hohen Druck auf die Oberschenkel zu vermeiden, der die Benutzung des Aufsatzes 1 zu wenig komfortabel machen kann. Eine Breite B von mehr als 20 cm wird andererseits den Komfort kaum erhöhen.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Aufsatz (1) für einen Toilettensitz (2) zur Bildung einer gegenüber der Sitzfläche (3) des Toilettensitzes (2) erhöhten Aufsatzsitzfläche (4), wobei der Aufsatz lose auf dem Toilettensitz platzierbar ausgeführt und im Wesentlichen als eine rechteckförmige Platte ausgebildet ist und eine die Aufsatzsitzfläche (4) bildende Oberseite, eine zur Auflage auf der Sitzfläche (3) bestimmte Unterseite (5), eine Vorderseite (6), eine Rückseite (7) und zwei Seitenflächen (8, 9) aufweist, wobei der Aufsatz aus mindestens zwei Lagen gebildet ist oder aus zwei Lagen besteht, wobei eine erste starre Lage (10) die Oberseite bzw. die Aufsatzsitzfläche (4) bildet und eine zweite elastische Lage (11) die Unterseite bildet, und wobei die Rückseite (7) des Aufsatzes (1) eine Einbuchtung (17) aufweist, welche sich über alle bzw. beide Lagen erstreckt.

2. Aufsatz nach Anspruch 1, wobei dessen Dicke D im Bereich von ca. 3 cm bis 6 cm liegt, wobei die elastische Lage im unbelasteten Zustand einen Dickenanteil von 0,5 cm bis 2 cm der Dicke des Aufsatzes ausmacht.

3. Aufsatz nach Anspruch 2, wobei die elastische Lage aus Naturkautschuk gebildet ist, oder wobei die elastische Lage aus einem Elastomer, insbesondere einem synthetischen Kautschuk, gebildet ist.

4. Aufsatz nach einem der Ansprüche 1 bis 3, wobei die starre Lage aus Holz gebildet ist oder wobei die starre Lage aus Kunststoff gebildet ist.

5. Aufsatz nach einem der Ansprüche 1 bis 4, wobei die Breite B der Aufsatzsitzfläche (4) 16 cm bis 20 cm beträgt.

6. Aufsatz nach einem der Ansprüche 1 bis 5, wobei die Unterseite (5) und die Aufsatzsitzfläche (4) parallel zueinander liegen.
